# EUROPEAN PATENT APPLICATION

(11) **EP 3 272 502 A1**
(43) Date of publication of application: **24.01.2018**
(21) Application number: 15885570.0
(22) Date of filing: 13.11.2015
(51) Int. Cl.: B29C 65/16

(54) **WELDED SYNTHETIC RESIN BODY, AND PRODUCTION METHOD THEREFOR**

(30) Priority: 18.03.2015 JP 2015055203
(71) Applicant: Taiho Kogyo Co., Ltd, Toyota-shi, Aichi 471-8502 (JP)
(72) Inventor: UENO Yuzo, Toyota-shi Aichi 471-8502 (JP); MATSUI Shinya, Toyota-shi Aichi 471-8502 (JP); KAWAHARA Masahiro, Toyota-shi Aichi 471-8502 (JP)
(74) Representative: Kuhnen & Wacker
(86) International application number: PCT/JP2015/081944
(87) International publication number: WO 2016/147478

(57) **Abstract**

There are provided a synthetic resin welded body and a method of manufacturing the same, with which it is possible to suppress protrusion of a welding burr formed at a welding portion into a position where the welding burr may affect performance and is not wanted to be formed.

The method of manufacturing the synthetic resin welded body includes the steps of preparing an oil passage forming member 120 including a welding portion 124 having a top portion serving as a welding face 124a; preparing a baffle plate 110 having a welded face 111a; disposing the oil passage forming member 120 and the baffle plate 110 so that the welding face 124a comes in contact with the welded face 111a; and radiating laser light to the welding portion 124 to weld the welding face 124a and the welded face 111a. A recess 111 is formed in the baffle plate 110 so that a groove portion 140 is formed along an outer peripheral face of the welding portion 124 when the oil passage forming member 120 and the baffle plate 110 are disposed so that the welding face 124a comes in contact with the welded face 111a.

## Description

### TECHNICAL FIELD

The present invention relates to a synthetic resin welded body formed by welding synthetic resin parts with each other and a method of manufacturing the same.

### BACKGROUND ART

Conventionally, there is a known technique of a synthetic resin welded body formed by welding synthetic resin parts with each other. An example of the technique is disclosed in Patent Literature 1.

In Patent Literature 1, a cylinder head cover including a baffle plate in a rectangular flat plate shape and a flow passage forming member which is brought in contact with (laid over) the baffle plate from below to form an oil passage is disclosed. The baffle plate and the flow passage forming member are welded to each other at a welding portion (a contact face of the fluid passage forming member) adjacent to the oil passage.

However, in the structure described in Patent Literature 1, in melting the welding portion with laser light to weld the baffle plate and the flow passage forming member to each other, a welding burr produced at the welding portion protrudes in positions where the welding burr may affect performance and is not wanted to be formed. Concretely, the welding burr protrudes into the oil passage.

### CITATION LIST

### PATENT LITERATURE

Patent Literature 1: Japanese Patent Application Laid-open No. 2007-127014

### SUMMARY OF INVENTION

### TECHNICAL PROBLEM

The present invention has been made with the above-described circumstances in view and it is an object of the invention to provide a synthetic resin welded body and a method of manufacturing the same, in which it is possible to suppress protrusion of a welding burr formed at a welding portion into a position where the welding burr may affect performance and is not wanted to be formed.

### SOLUTION TO PROBLEM

The problem to be solved by the present invention is as described above and solutions to the problem will be described next.

A synthetic resin welded body according to an aspect of the invention includes: a first synthetic resin part having a welding portion which is formed in a protruding shape and which has a top portion serving as a welding face; a second synthetic resin part which has a welded face for coming in contact with the welding portion and which is welded to the first synthetic resin part by welding of the welding portion and the welded face to each other; and a groove portion which is formed along an outer peripheral face of the welding portion.

The second synthetic resin part includes a recess which houses the welding portion and which has a bottom portion serving as the welded face and the groove portion is formed between an inner wall of the recess and an outer wall of the welding portion.

The second synthetic resin part is a baffle plate which is disposed on a cylinder head cover and the first synthetic resin part is an oil passage forming member which has a recessed portion recessed in an opposite direction to a protruding direction of the welding portion and which is fixed to one face of the baffle plate to thereby form an oil passage with the recessed portion and the baffle plate.

A method of manufacturing a synthetic resin welded body according to another aspect of the invention includes: an absorption-side synthetic resin part preparing step of preparing a laser light absorbing absorption-side synthetic resin part having a welding portion which is formed in a protruding shape and which has a top portion serving as a welding face; a transmission-side synthetic resin part preparing step of preparing a laser light transmissive transmission-side synthetic resin part having a welded face in a position corresponding to the welding portion; a disposing step of disposing the absorption-side synthetic resin part and the transmission-side synthetic resin part so that the welding face comes in contact with the welded face; and the laser welding step of radiating the laser light to the welding portion from a side of the transmission-side synthetic resin part to melt the welding portion to thereby weld the absorption-side synthetic resin part and the transmission-side synthetic resin part to each other at the welding face and the welded face to obtain the synthetic resin welded body, the recess/recesses is/are formed in the absorption-side synthetic resin part and/or the transmission-side synthetic resin part so that a groove portion is formed along an outer peripheral face of the welding portion when the absorption-side synthetic resin part and the transmission-side synthetic resin part are disposed so that the welding face comes in contact with the welded face in the disposing step.

The recess is formed in the transmission-side synthetic resin part, houses the welding portion in the disposing step, and has a bottom face of the recess serving as the welded face, and the groove portion is formed between an inner wall of the recess and an outer wall of the welding portion when the welding portion is housed in the recess in the disposing step.

The welding portion has a greater height than a depth of the recess and the welding portion is melted until the absorption-side synthetic resin part and the transmission-side synthetic resin part come in contact with each other in the laser welding step.

The groove portion has a greater capacity than a volume of a portion of the welding portion to be melted in the laser welding step.

The transmission-side synthetic resin part is a baffle plate which is disposed on a cylinder head cover, the absorption-side synthetic resin part is an oil passage forming member which includes a recessed portion recessed in an opposite direction to a protruding direction of the welding portion and which is fixed to one face of the baffle plate to thereby form the oil passage with the recessed portion and the baffle plate.

In the synthetic resin welded body, the baffle plate and the oil passage forming member are in contact with each other between the groove portion and the oil passage.

In the synthetic resin welded body, the baffle plate and the oil passage forming member are in contact with each other between the groove portion and an end portion of the oil passage forming member.

### ADVANTAGEOUS EFFECTS OF INVENTION

As effects of the aspects of the present invention, the following effects are exerted.

In the synthetic resin welded body according to the one aspect of the invention, it is possible to suppress protrusion of the welding burr formed at the welding portion into a position where the welding burr may affect performance and is not wanted to be formed.

In the synthetic resin welded body according to the aspect of the invention, it is possible to suppress protrusion of the welding burr into the oil passage.

In the method of manufacturing the synthetic resin welded body according to the other aspect of the invention, it is possible to suppress protrusion of the welding burr formed at the welding portion into a position where the welding burr may affect performance and is not wanted to be formed.

In the method of manufacturing the synthetic resin welded body according to the aspect of the invention, when the absorption-side synthetic resin part is laser-welded while positioned above the transmission-side synthetic resin part, it is possible to suppress flowing of the welding burr out of the groove portion.

In the method of manufacturing the synthetic resin welded body according to the aspect of the invention, it is possible to control the melted amount of the welding portion.

In the method of manufacturing the synthetic resin welded body according to the aspect of the invention, the entire welding burr can be housed in the groove portion.

In the method of manufacturing the synthetic resin welded body according to the aspect of the invention, it is possible to suppress protrusion of the welding burr into the oil passage.

In the method of manufacturing the synthetic resin welded body according to the aspect of the invention, it is easier to suppress the protrusion of the welding burr into the oil passage.

In the method of manufacturing the synthetic resin welded body according to the aspect of the invention, it is possible to suppress protrusion of the welding burr outside the baffle plate.

### BRIEF DESCRIPTION OF DRAWINGS

Fig. 1 is a cross-sectional view of an inside of a cylinder head cover of an engine and shows a state of use of a baffle plate and an oil passage forming member according to an embodiment of the present invention.
Fig. 2 is a bottom view of the baffle plate.
Fig. 3 is a plan view of the oil passage forming member.
Fig. 4 is a plan view of a welded body formed by the baffle plate and the oil passage forming member.
Fig. 5 is a cross-sectional view taken along line A-A in Fig. 4.
Fig. 6 is a flowchart of a method of manufacturing the welded body formed by the baffle plate and the oil passage forming member according to the embodiment of the invention.
Fig. 7 is a partial cross-sectional view showing a state of a welding portion before laser welding.
Fig. 8 is a partial cross-sectional view showing a state of the welding portion after the laser welding.
Figs. 9(a) and 9(b) are partial cross-sectional views of a welded body formed by a baffle plate and an oil passage forming member according to another embodiment of the invention, Fig. 9(a) shows a state of a welding portion before laser welding and Fig. 9(b) shows a state of the welding portion after the laser welding.

### DESCRIPTION OF EMBODIMENT

Directions shown by arrows U, D, F, B, L, and R in the diagrams are respectively defined as an upward direction, a downward direction, a forward direction, a backward direction, a leftward direction, and a rightward direction and a description will be given below.

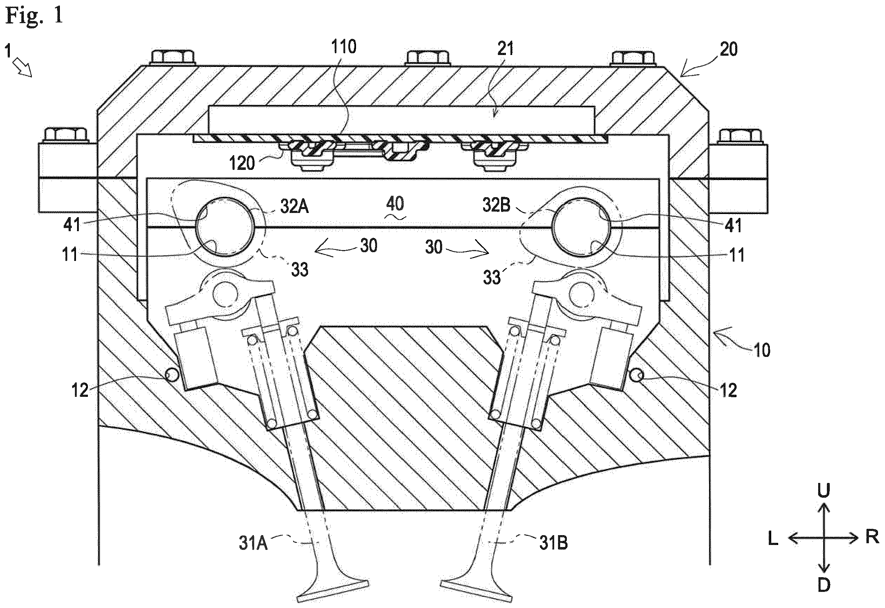

First, by using Fig. 1, a structure of an engine 1 including a baffle plate 110 and an oil passage forming member 120 according to an embodiment of the present invention will be described.

The engine 1 according to the embodiment includes valve gears 30, which will be described later, on both of an intake side and an exhaust side. Because structures of the valve gears 30 on the intake side and the exhaust side are substantially the same, the structure on the exhaust side (the structure on a left side in Fig. 1) will be mainly described and the structure on the intake side (the structure on a right side in Fig. 1) will be omitted appropriately for convenience of description.

The engine 1 mainly includes a cylinder head 10, a cylinder head cover 20, the valve gear 30, a cam cap 40, the baffle plate 110, and the oil passage forming member 120.

The cylinder head 10 along with a cylinder block (not shown) forms a main structural body of the engine 1. The cylinder head 10 is fixed to an upper portion of the cylinder block. The cylinder head 10 mainly includes cylinder head-side bearing portions 11 and oil galleries 12.

The cylinder head-side bearing portion 11 supports an exhaust-side camshaft 32A (described later) from below so that the exhaust-side camshaft 32A can rotate. The cylinder head-side bearing portion 11 is formed in a left portion of the cylinder head 10 to form a semicircular recess with an upper side open in front view.

The oil gallery 12 is an oil passage for feeding lubricant to respective portions of the engine 1. The oil gallery 12 is formed to pass through a left wall of the cylinder head 10 in a front-back direction.

The cylinder head cover 20 covers an upper portion of the cylinder head 10. The cylinder head cover 20 is formed in a shape of a bowl with a lower side open. The cylinder head cover 20 is placed on the upper portion of the cylinder head 10 and suitably fixed with bolts or the like. The baffle plate 110 (described later) is mounted to an inner side of the cylinder head cover 20 to form an oil separator chamber 21. The oil separator chamber 21 can store blow-by gas and cause the gas to flow back to an intake system after carrying out oil dropping.

The valve gear 30 is for opening and closing exhaust ports (not shown) of the engine 1 at predetermined times. The valve gear 30 mainly includes exhaust valves 31A and the exhaust-side camshaft 32A.

The exhaust valves 31A are for opening and closing the exhaust ports (not shown) of the engine 1. Each of the exhaust valves 31A is disposed with its longitudinal direction oriented substantially in a vertical direction. A lower end of the exhaust valve 31A extends to the exhaust port. A middle portion of the exhaust valve 31A in the vertical direction is inserted through the cylinder head 10 to be able to slide.

The exhaust-side camshaft 32A is for driving the valve gear 30 for opening and closing. The exhaust-side camshaft 32A is placed on the cylinder head-side bearing portion 11 of the cylinder head 10 with its longitudinal direction oriented substantially in the front-back direction. The exhaust-side camshaft 32A includes cams 33.

Each of the cams 33 is a portion formed in a plate shape having an irregular distance from a center of rotation (center of the exhaust-side camshaft 32A) to an outer periphery. The cam 33 is disposed in a position corresponding to each of cylinders in the front-back direction. The cam 33 is disposed above the exhaust valve 31A. The cam 33 rotates about an axial center of the exhaust-side camshaft 32A to thereby cause the exhaust valve 31A to slide in the vertical direction with respect to the cylinder head 10.

The cam cap 40 is fixed to the upper portion of the cylinder head 10 to retain the exhaust-side camshaft 32A between the cylinder head 10 and the cam cap 40. The cam cap 40 is formed in a substantially rectangular parallelepiped shape with its longitudinal direction oriented in the left-right direction. The cam cap 40 mainly includes a cam cap-side bearing portion 41.

The cam cap-side bearing portion 41 supports the exhaust-side camshaft 32A from above so that the exhaust-side camshaft 32A can rotate. The cam cap-side bearing portion 41 is formed in a left portion of the cam cap 40 to form a semicircular recess with a lower side open in front view. The cam cap-side bearing portion 41 is formed in a position facing the cylinder head-side bearing portion 11 in the cylinder head 10 and cooperates with the cylinder head-side bearing portion 11 to rotatably support the exhaust-side camshaft 32A.

Although it is not described concretely, the engine 1 having the above-described structure includes, as an intake-side structure (structure on a right side in Fig. 1), the (intake-side) valve gear 30 for opening and closing intake ports (not shown) of the engine 1 at predetermined times. The intake-side valve gear 30 includes intake valves 31B for opening and closing the intake ports (not shown) of the engine 1 and an intake-side camshaft 32B for driving the intake-side valve gear 30 for opening and closing as shown in Fig. 1.

By using Figs. 1 to 5, structures of the baffle plate 110 and the oil passage forming member 120 will be described below in detail.

The baffle plate 110 shown in Figs. 1, 2, 4, and 5 is a member for defining the oil separator chamber 21. The baffle plate 110 is formed in a rectangular plate shape. The baffle plate 110 is mounted to the inner side of the cylinder head cover 20. The baffle plate 110 is disposed with its longitudinal direction oriented in the front-back direction and its plate faces facing in the vertical direction. The baffle plate 110 includes a recess 111. Details of a structure of the recess 111 will be described later.

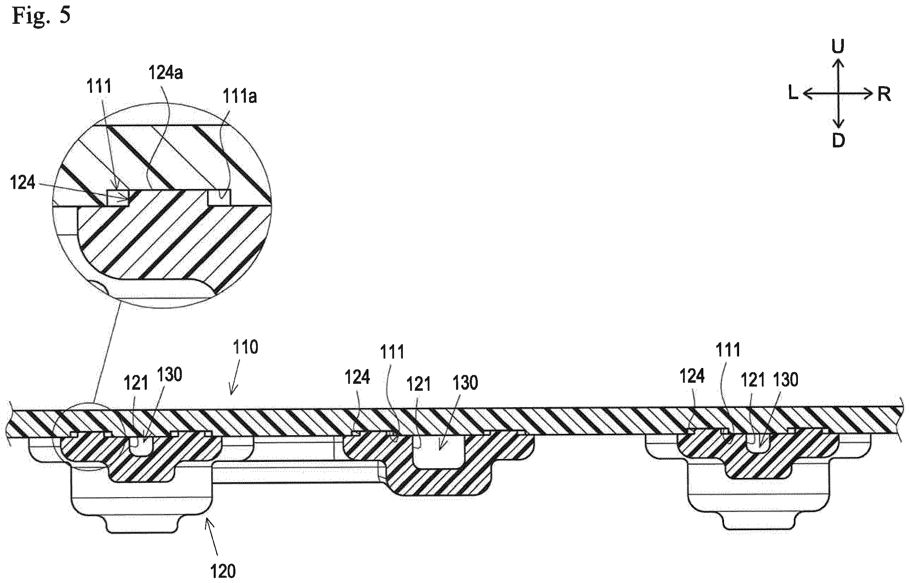

The oil passage forming member 120 shown in Figs. 1 and 3 to 5 is a member for forming a lubricant feed path for feeding the lubricant to predetermined lubrication portions. The oil passage forming member 120 has such an outside shape in plan view as to surround a periphery of the lubricant feed path. The oil passage forming member 120 is formed in a plate shape with its central portion (portion corresponding to the lubricant feed path) protruding downward (see Fig. 5). The oil passage forming member 120 is fixed to a lower face of the baffle plate 110. The oil passage forming member 120 includes a recessed portion 121, an introduction port 122, discharge ports 123, and a welding portion 124.

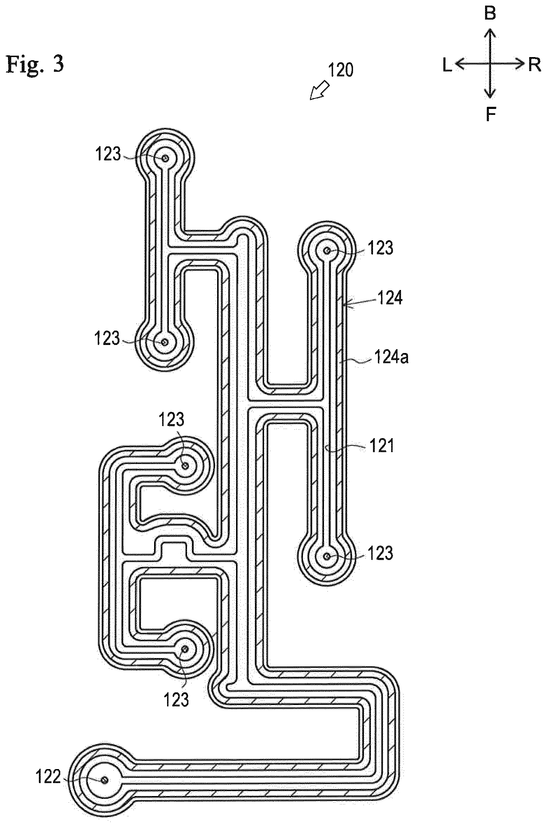

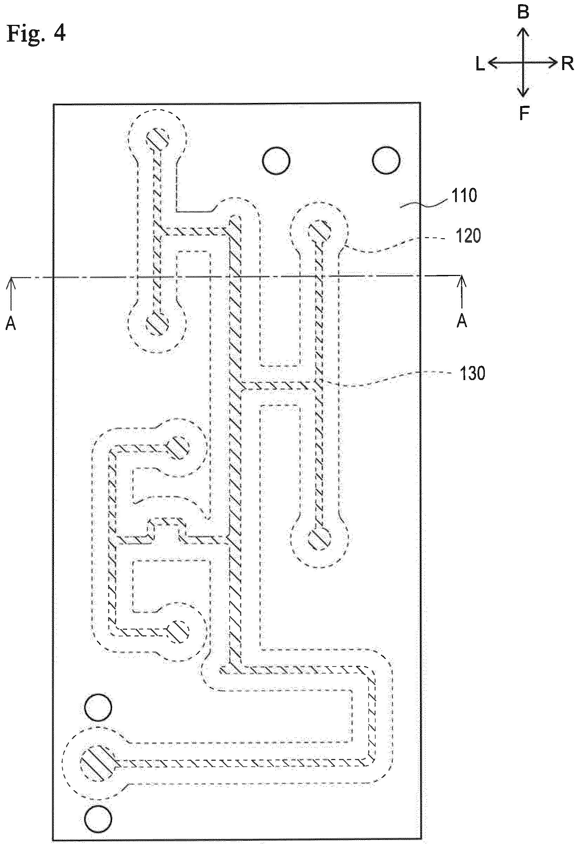

The recessed portion 121 shown in Figs. 3 and 5 is formed with its portion corresponding to the lubricant feed path recessed downward (in an opposite direction to a protruding direction of the welding portion 124 described later). The recessed portion 121 is branched so as to form end portions in positions corresponding to the predetermined lubrication portions. With the oil passage forming member 120 fixed to the lower face of the baffle plate 110, the recessed portion 121 forms an oil passage 130 (see Fig. 5) between the baffle plate 110 and the oil passage forming member 120. In other words, the recessed portion 121 forms side walls and a bottom wall of the oil passage 130. The oil passage 130 is formed in a hatched area in Fig. 4 so as to feed the lubricant from the oil gallery 12 fed through a predetermined oil passage to the predetermined lubrication portions (e.g., the cams 33).

The introduction port 122 shown in Fig. 3 is a portion for introducing the lubricant into the oil passage 130. The introduction port 122 is formed to extend downward from a bottom face of the recessed portion 121 to pass through the oil passage forming member 120 in the vertical direction. The introduction port 122 is formed near a front left end portion of the oil passage forming member 120. The introduction port 122 communicates with the oil gallery 12 through the predetermined oil passage.

The discharge ports 123 shown in Fig. 3 are portions for discharging the lubricant flowing through the oil passage 130 to the predetermined lubrication portions. The discharge ports 123 are formed to extend downward from the bottom face of the recessed portion 121 to pass through the oil passage forming member 120 in the vertical direction. The discharge ports 123 are respectively formed at the respective end portions (positions corresponding to the predetermined lubrication portions) of the recessed portion 121 (oil passage 130). To put it concretely, the discharge ports 123 are formed above the cams 33.

The welding portion 124 shown in Figs. 3 and 5 are portions where the oil passage forming member 120 is welded to the baffle plate 110. The welding portion 124 is formed in a protruding shape on an upper face of the oil passage forming member 120. The welding portion 124 is formed in a hatched area in Fig. 3 to extend from a position near a front end to a position near a back end of the oil passage forming member 120 in plan view. To put it concretely, the welding portion 124 is formed to lay a closed trail on an outer side of the recessed portion 121 along the recessed portion 121 in plan view. In a state in which the baffle plate 110 and the oil passage forming member 120 are integrated with each other by laser welding, a height (vertical length) of the welding portion 124 is substantially equal to a depth of the recess 111 (see Fig. 5). A welding face 124a is formed at a top portion of the welding portion 124.

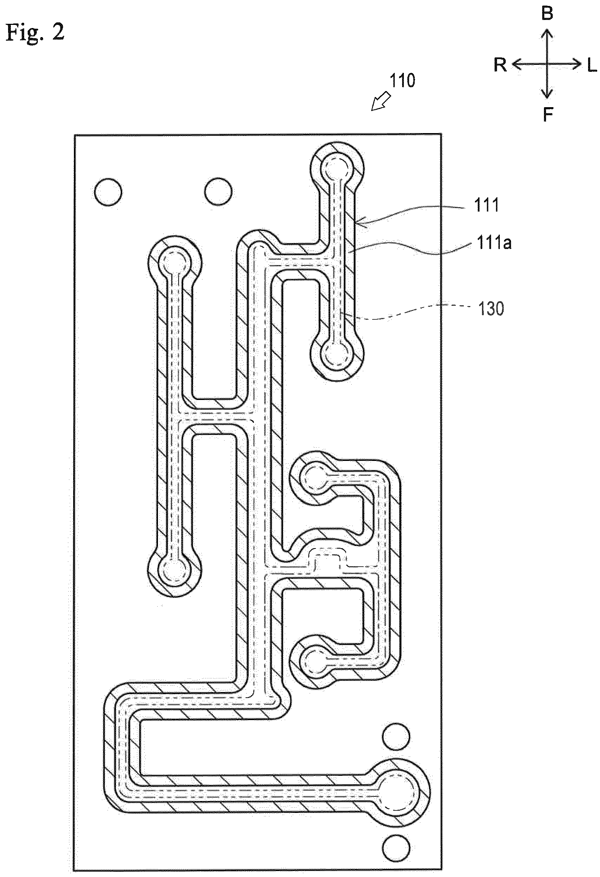

The recess 111 shown in Figs. 2 and 5 is a portion formed in a recessed groove shape in the lower face of the baffle plate 110. The recess 111 is formed in a hatched area in Fig. 2 to extend from a position near a front end to a position near a back end of the baffle plate 110 in bottom view. To put it concretely, the recess 111 is formed to lay a closed trail on an outer side of the oil passage 130 along the oil passage 130 in bottom view. The shape of the recess 111 in bottom view is substantially the same as that of the welding portion 124 in plan view. A dimension of the recess 111 in a width direction (dimension of the recess 111 in the left-right direction in the cross-sectional view in Fig. 5) is greater than a dimension of the welding portion 124 in the width direction (dimension of the welding portion 124 in the left-right direction in the cross-sectional view in Fig. 5). In this way, the recess 111 houses the welding portion 124. On a bottom portion of the recess 111, a welded face 111a is formed.

By laying the baffle plate 110 and the oil passage forming member 120 over each other (sticking them together) in the vertical direction and laser-welding them to each other, a welded body (synthetic resin welded body) is formed.

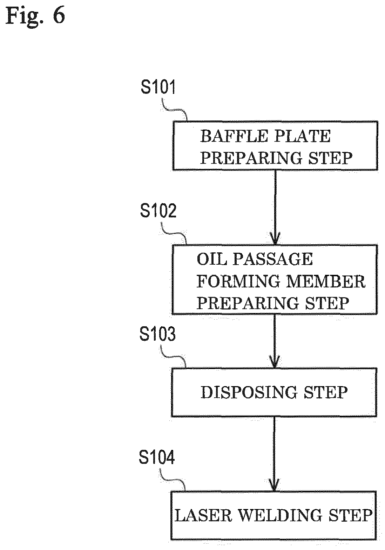

By using Figs. 6 to 8, a method of manufacturing the welded body formed by the baffle plate 110 and the oil passage forming member 120 will be described below in detail. In a manufacturing process of the manufacturing method according to the embodiment, the baffle plate 110 is disposed on a lower side and the oil passage forming member 120 is disposed on an upper side.

The method of manufacturing the welded body formed by the baffle plate 110 and the oil passage forming member 120 according to the embodiment of the invention includes a baffle plate preparing step, an oil passage forming member preparing step, a disposing step, and a laser welding step.

In the baffle plate preparing step, the baffle plate 110 is prepared (step S101). The baffle plate 110 is made of laser light transmissive synthetic resin. It is essential only that the baffle plate 110 have transmittance of the laser light to be used (laser light of a predetermined wavelength) and the baffle plate 110 having the laser light transmittance not lower than 25% may be used, for example. To put it concretely, as material of the baffle plate 110, polyester resin such as polybutylene terephthalate (PBT) and polyethylene terephthalate (PET), polyolefin resin such as polyethylene and polypropylene, polyamide resin, vinyl chloride resin, fluorine resin, and the like can be used.

In the oil passage forming member preparing step, the oil passage forming member 120 is prepared (step S102). Because the welding portion 124 of the oil passage forming member 120 is melted by the laser light in the later step, a height of the welding portion 124 is greater than the depth of the recess 111. The oil passage forming member 120 is made of laser light absorbing synthetic resin. It is essential only that the oil passage forming member 120 have absorbance of the laser light to be used and the oil passage forming member 120 having the transmittance of the laser light not higher than 5% can be used, for example. To put it concretely, as material of the oil passage forming member 120, the same synthetic resin as that used for the above-described baffle plate 110 into which an absorbent such as carbon black for increasing the absorbance is mixed can be used.

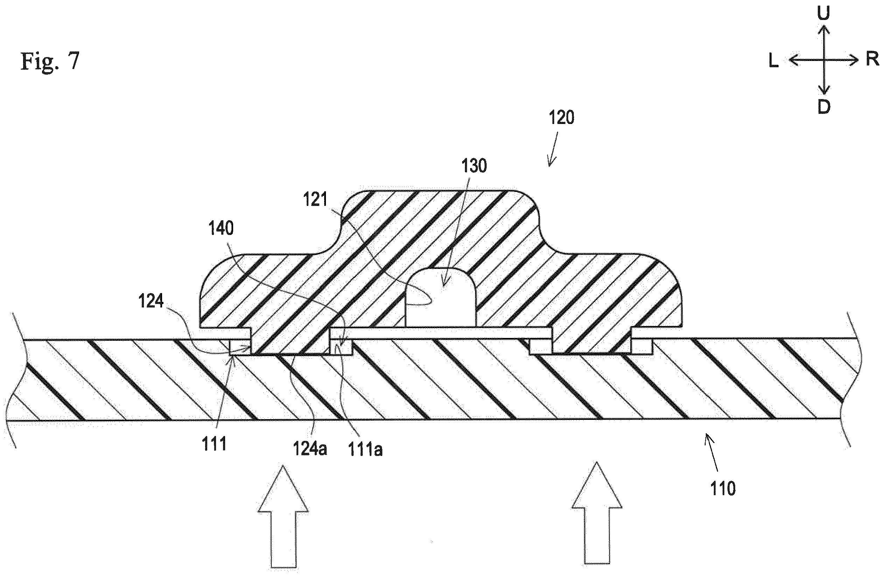

In the disposing step, the baffle plate 110 and the oil passage forming member 120 are disposed (step S103). The baffle plate 110 is disposed with its face having the recess 111 facing upward. The oil passage forming member 120 is disposed with its face having the welding portion 124 facing downward. The oil passage forming member 120 is disposed above the baffle plate 110. The oil passage forming member 120 is disposed so that the welding portion 124 is housed in the recess 111 and that the welding face 124a of the welding portion 124 comes in contact with the welded face 111a of the recess 111. At this time, the lower face of the oil passage forming member 120 (face on which the welding portion 124 is formed) is not in contact with the upper face of the baffle plate 110 (face in which the recess 111 is formed) and a clearance is formed between both the faces (see Fig. 7).

When the baffle plate 110 and the oil passage forming member 120 are disposed in this manner, a groove portion 140 is formed along an outer peripheral face of the welding portion 124. To put it concretely, the groove portion 140 is formed between an inner peripheral face (inner wall) of the recess 111 and the outer peripheral face (outer wall) of the welding portion 124. In other words, the groove portion 140 is a space in the recess 111 excluding a portion occupied by the welding portion 124.

In the laser welding step, the baffle plate 110 and the oil passage forming member 120 are laser-welded to each other (step S104). The laser light is radiated toward the welding portion 124 (welding face 124a) from below the baffle plate 110. A light source of the laser light is not especially restricted and a semiconductor laser, a YAG laser, or the like may be used.

Because the baffle plate 110 is made of the laser light transmissive synthetic resin, most of the laser light radiated from below the baffle plate 110 is not absorbed by the baffle plate 110 and passes through the baffle plate 110. Then the laser light is absorbed by the oil passage forming member 120 made of the laser light absorbing synthetic resin. To put it concretely, the laser light is absorbed by the welding portion 124 near the welding face 124a.

Energy of the laser light absorbed by the welding portion 124 is converted into heat. In this way, the welding face 124a is heated. When a temperature of the welding face 124a increases, a portion around the welded face 111a of the recess 111 in contact with the welding face 124a is also heated due to heat transfer. As a result, a melted layer is formed at a contact portion between the oil passage forming member 120 and the baffle plate 110 (between the welding face 124a and the welded face 111a). The melted layer cools down and sets and, as a result, the oil passage forming member 120 and the baffle plate 110 become welded to each other.

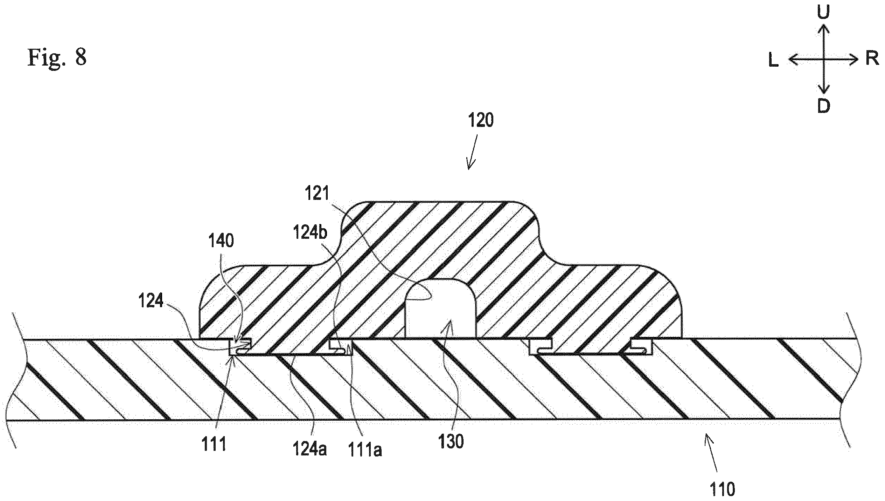

The radiation of the laser light is carried out until the welding portion 124 is melted and the lower face of the oil passage forming member 120 comes in contact with the upper face of the baffle plate 110. As a result, the baffle plate 110 and the oil passage forming member 120 come in contact with each other between the groove portion 140 and the oil passage 130. For example, if a left half portion of partial cross-sections of the baffle plate 110 and the oil passage forming member 120 shown in Fig. 8 is looked at, between a right end of the groove portion 140 (a right end of the recess 111) and a left end of the oil passage 130 (a left end of the recessed portion 121), the upper face of the baffle plate 110 and the lower face of the oil passage forming member 120 come in contact with each other.

Moreover, the baffle plate 110 and the oil passage forming member 120 come in contact with each other between the groove portion 140 and an end portion of the oil passage forming member 120. For example, if the left half portion of the partial cross-sections of the baffle plate 110 and the oil passage forming member 120 shown in Fig. 8 is looked at, between a left end of the groove portion 140 (a left end of the recess 111) and a left side face of the oil passage forming member 120, the upper face of the baffle plate 110 and the lower face of the oil passage forming member 120 come in contact with each other.

At this time, a part of the melted portion of the welding portion 124 protrudes outward from the outer peripheral face of the welding portion 124 to form a welding burr 124b (see Fig. 8). The groove portion 140 is formed to have a greater capacity than a volume of the portion of the welding portion 124 to be melted by being radiated with the laser light. Therefore, the welding burr 124b is housed in the groove portion 140 and it is possible to prevent the welding burr 124b from protruding into the oil passage 130.

If the welding burr 124b is pinched between the contact faces of the oil passage forming member 120 and the baffle plate 110, a dimension of the welded body in a height direction increases, which results in a change (increase) in height of the oil passage. On the other hand, with the manufacturing method according to the embodiment, the welding burr 124b is housed in the groove portion 140, which prevents the welding burr 124b from being pinched between the contact faces.

Furthermore, with the manufacturing method according to the embodiment, by melting the welding portion 124 until the lower face of the oil passage forming member 120 comes in contact with the upper face of the baffle plate 110, the baffle plate 110 and the oil passage forming member 120 are welded to each other. In this way, it is easy to know the time to finish the radiation of the laser light. Therefore, it is possible to stabilize a melted amount of the welding portion 124 to thereby always obtain the constant height of the oil passage and always obtain a target cross-sectional area of the oil passage 130.

Because a portion of the baffle plate 110 in contact with the lower face of the oil passage forming member 120 is thicker than a portion of the baffle plate 110 where the recess 111 is formed, the portion in contact with the lower face is less likely to transmit the laser light than the portion where the recess 111 is formed. As a result, even if an area radiated with the laser is broader or displaced, the portion (contact portion) of the oil passage forming member 120 other than the welding portion 124 is less likely to be melted by the laser light. Therefore, it is possible to intensively melt only the portion of the oil passage forming member 120 to be welded.

Moreover, because the baffle plate 110 is in contact with the oil passage forming member 120 at the portion other than the recess 111, it is possible to suppress protrusion (ejection) of the welding burr 124b into the oil passage 130 or outside the baffle plate 110 even if the welding burr 124b comes off the welding portion 124 after the laser welding step.

Furthermore, because the recess 111 for forming the groove portion 140 is formed in the baffle plate 110, the welding burr 124b formed by the laser welding stays on the bottom portion (welded face 111a) of the recess 111 by gravity. Therefore, before the baffle plate 110 and the oil passage forming member 120 come in contact with each other in the laser welding step, it is possible to make the welding burr 124b less likely to flow out of the groove portion 140 to thereby be pinched between the baffle plate 110 and the oil passage forming member 120 or protrude into the oil passage 130.

As described above, the welded body (synthetic resin welded body) according to the embodiment includes the oil passage forming member 120 (first synthetic resin part) having the welding portion 124 which is formed in the protruding shape and has the top portion serving as the welding face 124a, the baffle plate 110 (second synthetic resin part) which has the welded face 111a to come in contact with the welding portion 124 and which is welded to the oil passage forming member 120 by welding of the welding portion 124 and the welded face 111a to each other, and the groove portion 140 formed along the outer peripheral face of the welding portion 124.

With this structure, it is possible to suppress protrusion of the welding burr 124b formed at the welding portion 124 into the oil passage 130 (positions where the welding burr 124b may affect performance and is not wanted to be formed).

The baffle plate 110 includes the recess 111 which houses the welding portion 124 and which has the bottom face serving as the welded face 111a and the groove portion 140 is formed between the inner wall of the recess 111 and the outer wall of the welding portion 124.

With this structure, it is possible to suppress protrusion of the welding burr 124b formed at the welding portion 124 into the oil passage 130.

The method of manufacturing the welded body (synthetic resin welded body) according to the embodiment includes the oil passage forming member (absorption-side synthetic resin part) preparing step of preparing the laser light absorbing oil passage forming member 120 (absorption-side synthetic resin part) including the welding portion 124 which is formed into the protruding shape and which has the top portion serving as the welding face 124a, the baffle plate (transmission-side synthetic resin part) preparing step of preparing the laser light transmissive baffle plate 110 (transmission-side synthetic resin part) including the welded face 111a in the position corresponding to the welding portion 124, the disposing step of disposing the oil passage forming member 120 and the baffle plate 110 so that the welding face 124a comes in contact with the welded face 111a, and the laser welding step of radiating the laser light from the side of the baffle plate 110 on the welding portion 124 to melt the welding portion 124 to thereby weld the oil passage forming member 120 and the baffle plate 110 to each other at the welding face 124a and the welded face 111a to obtain the welded body. The recess 111 is formed in the baffle plate 110 so that the groove portion 140 is formed along the outer peripheral face of the welding portion 124 when the oil passage forming member 120 and the baffle plate 110 are disposed so that the welding face 124a comes in contact with the welded face 111a in the disposing step.

With this structure, it is possible to suppress protrusion of the welding burr 124b formed at the welding portion 124 into the oil passage 130 (positions where the welding burr 124b may affect performance and is not wanted to be formed).

The recess 111 is formed in the baffle plate 110, houses the welding portion 124 in the disposing step, and has the bottom face of the recess 111 serving as the welded face 111a. The groove portion 140 is formed between the inner wall of the recess 111 and the outer wall of the welding portion 124 when the welding portion 124 is housed in the recess 111 in the disposing step.

With this structure, when the oil passage forming member 120 is laser-welded while positioned above the baffle plate 110, it is possible to suppress flowing of the welding burr 124b out of the groove portion 140.

The welding portion 124 has the greater height than the depth of the recess 111 and the welding portion 124 is melted until the oil passage forming member 120 and the baffle plate 110 come in contact with each other in the laser welding step.

With this structure, it is possible to control the melted amount of the welding portion 124.

The groove portion 140 has the greater capacity than the volume of the portion of the welding portion 124 to be melted in the laser welding step.

With this structure, the entire welding burr 124b can be housed in the groove portion 140.

The baffle plate 110 is disposed on the cylinder head cover 20, the oil passage forming member 120 includes the recessed portion 121 recessed in the opposite direction to the protruding direction of the welding portion 124 and is fixed to the one face of the baffle plate 110 to thereby form the oil passage 130 with the recessed portion 121 and the baffle plate 110.

With this structure, it is easy to suppress protrusion of the welding burr 124b into the oil passage 130.

In the welded body, the baffle plate 110 and the oil passage forming member 120 are in contact with each other between the groove portion 140 and the oil passage 130.

With this structure, it is easier to suppress the protrusion of the welding burr 124b into the oil passage 130.

In the welded body, the baffle plate 110 and the oil passage forming member 120 are in contact with each other between the groove portion 140 and the end portion of the oil passage forming member 120.

With this structure, it is possible to suppress protrusion of the welding burr 124b outside the baffle plate 110.

Although the embodiment of the invention has been described above, the invention is not restricted to the above-described structure and can be changed in various ways without departing from the scope of the invention described in the claims.

For example, though the method of manufacturing the synthetic resin welded body formed by the baffle plate 110 and the oil passage forming member 120 has been described in the embodiment, the invention is not restricted to it. The invention may be applied to any synthetic resin welded body formed by an absorption-side synthetic resin part having absorbance of laser light and a transmission-side synthetic resin part having transmittance of the laser light.

Although the type of the engine for which the baffle plate 110 and the oil passage forming member 120 are used is not specified in the embodiment, the baffle plate 110 and the oil passage forming member 120 according to the embodiment can be applied to any type of engine.

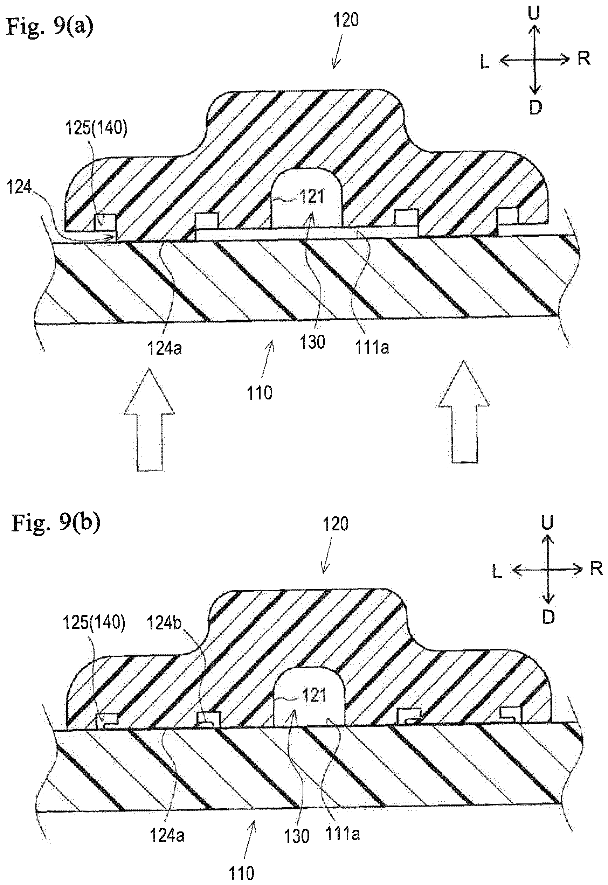

Although the recess 111 is formed in the baffle plate 110 in the embodiment, the invention is not restricted to it. For example, as shown in Figs. 9(a) and 9(b), a recess 125 may be formed in a lower face of an oil passage forming member 120 along an outer peripheral face of a welding portion 124. In this way, it is possible to make a structure of a baffle plate 110 simple. In this case, the recess 125 serves as a groove portion 140. A welding burr 124b is housed in the recess 125 (groove portion 140). Therefore, it is possible to prevent the welding burr 124b from protruding into the oil passage 130.

Alternatively, a recess 111 and a recess 125 may be formed respectively in a baffle plate 110 and an oil passage forming member 120.

Although the baffle plate 110 comes in contact with the oil passage forming member 120 at the portion other than the recess 111 in the embodiment, the invention is not restricted to it. The baffle plate 110 may not come in contact with the oil passage forming member 120 at the portion other than the recess 111 or may partially come in contact with the oil passage forming member 120. Because the welding face 124a of the welding portion 124 and the welded face 111a of the recess 111 are welded to each other, the oil passage 130 is sealed at this portion. Therefore, even if the baffle plate 110 does not come in contact with the oil passage forming member 120 at the portion other than the recess 111, the lubricant does not leak from the oil passage 130.

Although the entire baffle plate 110 is made of the laser light transmissive synthetic resin and the entire oil passage forming member 120 is made of the laser light absorbing synthetic resin in the embodiment, the invention is not restricted to it. It is essential only that the portions of the baffle plate 110 and the oil passage forming member 120 involved with the welding (the welding portion 124 and the recess 111) be made of the above-described materials.

Although the baffle plate 110 and the oil passage forming member 120 are laser-welded to each other in the embodiment, the invention is not restricted to it. As the method of welding the baffle plate 110 and the oil passage forming member 120 to each other, it is possible to employ ultrasonic welding, vibration welding, hot plate welding, or the like, besides the laser welding.

### INDUSTRIAL APPLICABILITY

The present invention can be applied to a synthetic resin welded body formed by welding synthetic resin parts to each other and a method of manufacturing the same.

### REFERENCE SIGNS LIST

110: Baffle plate (Second synthetic resin part) (Transmission-side synthetic resin part)
111: Recess
111a: Welded face
120: Oil passage forming member (First synthetic resin part) (Absorption-side synthetic resin part)
121: Recessed portion
124: Welding portion
124a: Welding face
125: Recess
130: Oil passage
140: Groove portion

## Claims

1. A synthetic resin welded body comprising:
a first synthetic resin part including a welding portion which is formed in a protruding shape and which has a top portion serving as a welding face;
a second synthetic resin part which includes a welded face for coming in contact with the welding portion and which is welded to the first synthetic resin part by welding of the welding portion and the welded face to each other; and
a groove portion which is formed along an outer peripheral face of the welding portion.

2. The synthetic resin welded body according to claim 1,
wherein the second synthetic resin part includes a recess which houses the welding portion and which has a bottom portion serving as the welded face and
the groove portion is formed between an inner wall of the recess and an outer wall of the welding portion.

3. The synthetic resin welded body according to claim 1 or 2,
wherein the second synthetic resin part is a baffle plate which is disposed on a cylinder head cover and
the first synthetic resin part is an oil passage forming member which includes a recessed portion recessed in an opposite direction to a protruding direction of the welding portion and which is fixed to one face of the baffle plate to thereby form an oil passage with the recessed portion and the baffle plate.

4. A method of manufacturing a synthetic resin welded body comprising:
an absorption-side synthetic resin part preparing step of preparing a laser light absorbing absorption-side synthetic resin part including a welding portion which is formed in a protruding shape and which has a top portion serving as a welding face;
a transmission-side synthetic resin part preparing step of preparing a laser light transmissive transmission-side synthetic resin part including a welded face in a position corresponding to the welding portion;
a disposing step of disposing the absorption-side synthetic resin part and the transmission-side synthetic resin part so that the welding face comes in contact with the welded face; and
the laser welding step of radiating the laser light to the welding portion from a side of the transmission-side synthetic resin part to melt the welding portion to thereby weld the absorption-side synthetic resin part and the transmission-side synthetic resin part to each other at the welding face and the welded face to obtain the synthetic resin welded body,
wherein the recess/recesses is/are formed in the absorption-side synthetic resin part and/or the transmission-side synthetic resin part so that a groove portion is formed along an outer peripheral face of the welding portion when the absorption-side synthetic resin part and the transmission-side synthetic resin part are disposed so that the welding face comes in contact with the welded face in the disposing step.

5. The method of manufacturing the synthetic resin welded body according to claim 4,
wherein the recess is formed in the transmission-side synthetic resin part, houses the welding portion in the disposing step, and has a bottom face of the recess serving as the welded face, and
the groove portion is formed between an inner wall of the recess and an outer wall of the welding portion when the welding portion is housed in the recess in the disposing step.

6. The method of manufacturing the synthetic resin welded body according to claim 4 or 5,
wherein the welding portion has a greater height than a depth of the recess and
the welding portion is melted until the absorption-side synthetic resin part and the transmission-side synthetic resin part come in contact with each other in the laser welding step.

7. The method of manufacturing the synthetic resin welded body according to any one of claims 4 to 6,
wherein the groove portion has a greater capacity than a volume of a portion of the welding portion to be melted in the laser welding step.

8. The method of manufacturing the synthetic resin welded body according to any one of claims 4 to 7,
wherein the transmission-side synthetic resin part is a baffle plate which is disposed on a cylinder head cover,
the absorption-side synthetic resin part is an oil passage forming member which includes a recessed portion recessed in an opposite direction to a protruding direction of the welding portion and which is fixed to one face of the baffle plate to thereby form the oil passage with the recessed portion and the baffle plate.

9. The method of manufacturing the synthetic resin welded body according to claim 8,
wherein, in the synthetic resin welded body, the baffle plate and the oil passage forming member are in contact with each other between the groove portion and the oil passage.

10. The method of manufacturing the synthetic resin welded body according to claim 8 or 9,
wherein, in the synthetic resin welded body, the baffle plate and the oil passage forming member are in contact with each other between the groove portion and an end portion of the oil passage forming member.
